# EUROPÄISCHE PATENTSCHRIFT

(11) **EP 2 008 960 B1**
(45) Veröffentlichungstag und Bekanntmachung des Hinweises auf die Patenterteilung: **06.11.2013**
(21) Anmeldenummer: 08009972.4
(22) Anmeldetag: 30.05.2008
(51) Int. Cl.: B65G 1/04, B65G 1/137, B66F 9/24, B66F 9/075

(54) **Flurförderzeug, Lagersystem und Verfahren zur Zielfindung in Lagersystemen**
Industrial truck, storage system and method for finding targets in storage systems
Chariot de manutention, système de stockage et procédé destiné à atteindre sa cible dans des systèmes de stockage

(30) Priorität: 28.06.2007 DE 102007029887
(43) Veröffentlichungstag der Anmeldung: 31.12.2008
(73) Patentinhaber: KION Warehouse Systems GmbH, 72766 Reutlingen (DE)
(72) Erfinder: Barth, Volker, 72584 Hülben (DE); Lauxmann, Siegfried, 72574 Bad Urach-Wittlingen (DE); Bez, Rolf, 72555 Metzingen-Glems (DE)
(74) Vertreter: Geirhos, Johann

(56) Entgegenhaltungen:
- DE-A1- 19 814 941
- JP-A- 2003 034 497
- JP-A- 2004 210 431
- JP-A- 2008 087 891
- US-A- 4 595 331
- US-A1- 2005 052 281

## Beschreibung

Die Erfindung betrifft ein Flurförderzeug, ein Lagersystem sowie ein Verfahren zur Zielfindung in Lagersystemen. Insbesondere betrifft die Erfindung Kommissionierstapler, Hochregalstapler und Schubmaststapler.

### Stand der Technik

Kommissionierstapler, Hochregalstapler und Schubmaststapler kommen in Regallagern zum Einsatz. Da die Grundfläche eines solchen Lagers entscheidend die Erstellungskosten des Lagers bestimmt, werden hoch bauende Regale verwendet und die Verkehrsflächen, wie Gangbreiten, möglichst klein gehalten. Hochregalstapler sind hierauf eingerichtet, indem eine Lastaufnahmegabel quer angeordnet ist und kein Drehen des Staplers im Gang erforderlich ist. Bei Kommissionierstaplern kann der Bediener zusätzlich mit dem Lastaufnahmeabschnitt nach oben fahren und hat bei hohen Regalen eine gute Sicht auf die im Regal positionierten Paletten bzw. den Regalplatz. Naturgemäß ist die Orientierung in einem solchen Regallager durch die Unübersichtlichkeit und den sich wiederholenden Aufbau der Regalabschnitte nicht einfach. Das Auffinden eines gewünschten Palettenplatzes in einem Regallager obliegt üblicherweise dem Fahrer des Flurförderzeugs bzw. Kommissionierstaplers, wobei sich der Fahrer rein optisch, insbesondere an Beschilderungen orientiert, die an dem Regal angebracht sind.

Bei der Orientierung innerhalb des Regallagers allein durch den Fahrer kommt es oft zu Verwechslungen. Um dies zu vermeiden, wird eine sehr umfangreiche und aufwändige Beschilderung innerhalb des Regallagers notwendig.

Aus der DE 2005 043 781 ist ein Flurförderzeug, insbesondere ein Gegengewichtgabelstapler, mit einem im Bereich eines Hubgerüstes angeordneten in Vorwärtsfahrrichtung gerichteten, beispielsweise als Kamera ausgeführten Umgebungssensor bekannt. Der Umgebungssensor ist in vertikaler Richtung bewegbar an einem Gabelträger des Hubgerüsts befestigt. Dabei ist der Umgebungssensor in eine Position vorgespannt, in der sich der Umgebungssensor unterhalb des Gabelträgers befindet. An dem Hubgerüst ist ein Anschlag für den Umgebungssensor angeordnet, derart, dass der Umgebungssensor bei einem vollständigen Absenken des Gabelträgers relativ zum Gabelträger nach oben bewegt wird. Bei vollständig abgesenktem Gabelträger befindet sich der Umgebungssensor vollständig innerhalb der Vertikalerstreckung des Gabelträgers. Zur Vorspannung des Umgebungssensors ist mindestens eine Feder vorgesehen, die auf den Umgebungssensor eine nach unten gerichtete Kraft ausübt.

In einer Ausführungsform ist der Umgebungssensor mit Mitteln zum Identifizieren einer Last, beispielsweise einem RFID-Empfänger und/ oder einem Barcode-Scanner in Wirkverbindung. Da der Umgebungssensor innerhalb der Vertikalerstreckung des Gabelträgers liegt, kann er auf einem Lastaufnahmemittel, wie der Gabel, befindliche Lasten erfassen und identifizieren.

Nachteilig an diesem Stand der Technik ist jedoch, dass dieser Stand der Technik keine Möglichkeit gewährt, sicher und einfach eine gesuchte Stelle in dem Regallager zu finden. Durch beispielsweise eine Kamera als Umgebungssensor werden nur die Sichtmöglichkeiten des Fahrers nach vorne bei einer aufgenommenen Last verbessert. In der Ausführungsform mit einem Barcode-Scanner kann nur eine bereits aufgenommene Last erkannt werden.

Aus der DE 602 09 133 T2 ist ein Gabelstapler-RFID-System bekannt, das mindestens eine erste auf einem festen Abschnitt eines Mastes des Gabelstaplers positionierte RFID-Antenne aufweist. Mindestens eine zusätzliche Antenne ist auf dem bewegbaren Abschnitt des Gabelstaplers angeordnet. Durch Abfrage von RFID-Tags auf der aufgenommenen Last ist diese Last identifizierbar.

In einer Ausführungsform ist eine weitere Antenne zur Abfrage von RFID-Tags in einem Lagerbereich vorhanden.

Nachteilig an diesem Stand der Technik ist, dass die Empfangsbedingungen oft nicht optimal sind, wenn die RFID-Tags an ganz unterschiedlichen Montagepositionen angebracht sind.

Es ist daher Aufgabe der vorliegenden Erfindung, ein Flurförderzeug, insbesondere Kommissionierstapler, ein Lagersystem und ein Verfahren zur Verfügung zu stellen, mit denen es auf einfache Weise möglich ist, die Position des Flurförderzeugs innerhalb des Regallagers festzustellen.

Aus der JP 2003-034497 A ist ein unbemanntes Transportsystem zum Einlagern und Auslagern in Verschieberegellagern bekannt. Dabei werden von dem Verschieberegallager Daten über die offenen Gassen an ein selbstfahrendes Flurförderzeug übertragen. Das Flurförderzeug weist Sensoren zur Abstandsmessung, insbesondere seitlichen Abstandsmessung auf. Dabei ist in einer Ausführungsform gezeigt, dass die Abstandssensoren mit einem Lichtstrahl arbeiten, der einen an der Kopfseite eines Regals angeordneten Spiegel anleuchtet.

Aus der US 4,595,331 ist ein selbstfahrendes automatisches Flurförderzeug und ein zugehöriges System zur Beladung von Eisenbahnwagen bekannt. Dabei ist das Flurförderzeug mit Sensoren ausgestattet, die in mehrere Richtungen, u.a. auch seitlich den Abstand z.B. zu den Innenwänden eines Eisenbahnwaggons ermitteln. Es wird ein Auslesen einer Kommunikationseinheit an einer Ladungsaufnahmestation durch das Flurförderzeug offenbart, wobei Informationen übertragen werden.

Aus der JP 2004-210431 A ist ein Datenauslesesystem für Barcodes an Lagergütern bekannt.

Aus der JP 06-239410 A ist eine Hubgerüststeuerung für Ein-und Auslagerungsvorgänge in Lagerhäusern bekannt, bei der eine Positioninformationen in Form einer groben Ortsangabe, bestehend aus Reihenummer und Regalnummer, sowie eine präzise Ortsangabe in Form und Schnittlinien für die Regalmitte genutzt werden.

Diese Aufgabe wird durch ein Flurförderzeug nach Anspruch 1, ein Lagersystem nach Anspruch 7 und durch ein Verfahren zur Zielfindung In einem Lagersystem nach Anspruch 9 gelöst.

Bei einem Flurförderzeug, insbesondere Kommissionierstapler, mit zumindest einem Umgebungssensor zur Erfassung von in einem Regallager an einem Regal angebrachten Markierungen enthalten vorteilhaft die Markierungen Informationen über den Ort der Markierung im Regallager und ist ein Umgebungssensor in dem Flurförderzeug mit seiner Erfassungsrichtung quer zur Längsachse des Flurförderzeugs zur Seite hin orientiert. In vorteilhafter Ausführungsform ist der Umgebungssensor ein Laserscanner für Barcode-Labels.

Dadurch kann der Ort im Regallager erkannt werden. Verwechselungen des beabsichtigten Einlagerorts einer Palette können vermieden werden und der Fundort einer Palette kann automatisiert ermittelt werden. Beispielsweise in einem Hochregallager wird ein Fahrer dahingehend unterstützt, dass das Flurförderzeug die einzelnen Regalzeilen erkennt. Aufgrund gespeicherter Daten kann dann auch durch eine Steuerung noch ein Regalfach bzw. eine Hubhöhe vorgegeben werden. Durch ein erfindungsgemäßes Flurförderzeug können daher weitere Arbeitsschritte, wie z.B. das Abscannen des Zielregalfachs durch den Fahrer von Hand vermieden werden. Laserscanner stehen kostengünstig zur Verfügung und können zuverlässig über eine kurze Distanz Barcode-Labels erkennen. Barcode-Labels sind sehr einfach z.B. mittels eines Druckers und entsprechende Software zu erzeugen und können daher kostengünstig eingesetzt werden.

In günstiger Ausführungsform kann der Laserscanner senkrecht gegenüber dem Boden orientierte Barcode-Labels scannen.

Durch Erkennen von leiterförmig am Regal, insbesondere an den Regalstützen, angebrachten Barcode-Labels mit eindeutiger Codierung, die vom vorbeifahrenden Flurförderzeug senkrecht gescannt werden, indem sie zugleich insgesamt erfasst werden, oder überstrichen werden, ist eine absolute Positionserkennung im gesamten Regallager zu erreichen, da senkrechte Regalteile in allen Höhen vorhanden sind und eine gute Möglichkeit zum Anbringen der Barcode-Labels gewähren.

Vorteilhaft sind zwei Laserscanner in dem Flurförderzeug angeordnet, die zu beiden Seiten des Flurförderzeugs hin orientiert sind.

Durch die beidseitige Anbringung von Laserscannem wird eine Einfahrt des Flurförderzeugs in einen Gang des Regallagers in Vorwärts- oder Rückwärtsrichtung ermöglicht und somit die Nutzungsmöglichkeit des Flurförderzeug erweitert, da kein Wenden erforderlich ist und die Barcodes an dem Regal dennoch erkannt werden können. Alternativ kann durch eine beidseitige Anbringung von Barcode-Labels eine zusätzliche Redundanz erreicht werden.

In günstiger Ausführungsform ist der Umgebungssensor an einem durch eine Hubbewegung anhebbaren Abschnitt des Flurförderzeugs angeordnet und kann abhängig von der Hubhöhe auf verschiedenen Höhen angebrachte Markierungen erfassen.

Dadurch kann abhängig von der Hubhöhe verschiedene Markierungen oder Barcode-Labels erfasst werden und auf sehr einfache Weise eine Hubhöheninformation berücksichtigt werden.

Vorteilhaft ist eine Steuervorrichtung vorhanden, die die aktuelle Position des Flurförderzeugs zwischen der Erfassung zweier Markierungen aus der zurückgelegten Wegstrecke berechnet.

Zwischen den Markierungen oder Barcode-Labels kann dadurch einfach die Position durch eine im Fahrzeug Integrierte Wegstreckenmessung bestimmt werden. Durch eine Verringerung des Abstands der Markierungen bzw. Barcode-Labels kann die Genauigkeit der Positionsbestimmung erhöht werden.

Bei dem Erreichen einer gewünschten Zielposition kann die Steuerung eine Fahrbewegung des Flurförderzeugs und/oder eine Hubbewegung stoppen.

Das Auffinden eines Ziels wird durch das aktive Eingreifen in die Bewegung des Flurförderzeugs, wie hier durch Abbremsen bzw. Abstoppen der Fahrbewegung, unterstützt. Ebenso kann zugleich oder unabhängig davon das richtige Auffinden der Regalposition in der Höhe, des Regalfachs, durch ein Stoppen einer Hubbewegung erleichtert werden.

In günstiger Ausführungsform kann an einer gewünschten Zielposition die Steuerung eine von den Eigenschaften des Regals an der Zielposition abhängige Ausschubtiefe einer Lastgabel steuern.

Dadurch können regalspezifische positionsabhängige Eigenschaften anhand abgespeicherter Daten berücksichtigt werden.

Die Aufgabe wird auch durch ein Lagersystem mit einem Regal gelöst, das an einer Vorderseite angebrachte Markierungen aufweist, wobei die Markierungen Informationen über den Ort der Markierung im Regallager enthalten, und mit einem Flurförderzeug wie es zuvor beschrieben wurde.

Vorteilhaft sind die Markierungen Barcode-Labels, die an senkrechten Regalständern angebracht sind.

Ein Verfahren zur Zielfindung in einem Lagersystem unter Verwendung eines oben beschriebenen Lagersystems löst die Aufgabe, indem in einem ersten Schritt die IstPosition des Flurförderzeugs hinsichtlich Ort und/oder Hubhöhe durch die Steuerung bestimmt wird. Sodann wird der Weg zum Zielpunkt durch die Steuerung bestimmt und dieser Weg zum Zielpunkt für einen Fahrer durch eine Anzeigevorrichtung angezeigt.

In einer vorteilhaften Ausgestaltung stoppen bei dem Verfahren bei Erreichen des Zielpunkts eine Fahrbewegung des Flurförderzeugs und/oder eine Hubbewegung.

Vorteilhaft steuert an einer gewünschten Zielposition die Steuerung eine von den Eigenschaften des Regals an der Zielposition abhängige Ausschubtiefe einer Lastgabel.

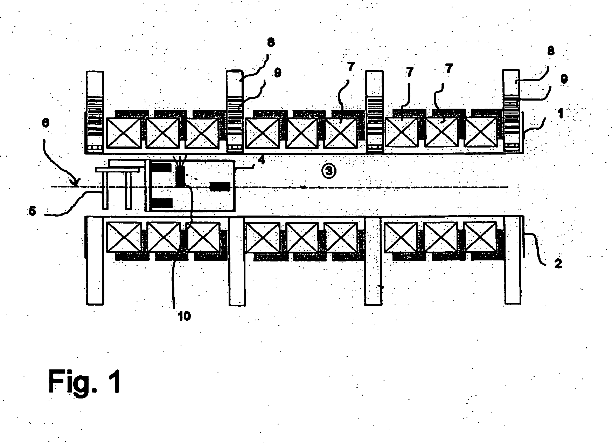

Weitere Vorteile und Einzelheiten der Erfindung werden anhand des in der schematischen Figur dargestellten Ausführungsbeispiels näher erläutert. Hierbei zeigt
Fig. 1 in Aufsicht schematisch ein erfindungsgemäßes Lagersystem in Aufsicht.

Die Fig. 1 zeigt in Aufsicht schematisch ein erfindungsgemäßes Lagersystem. Ein erstes Hochregal 1 und ein zweites Hochregal 2 bilden zwischen sich einen Gang 3, in dem sich ein Kommissionierstapler 4 befindet, dessen Gabel 5 quer zu einer Fahrzeuglängsachse 6 des Kommissionierstapler 4 angeordnet ist. Auf einem jeden Regalfach des ersten und zweiten Hochregals 1,2 befinden sich hier durch Quadrate dargestellte Palettenplätze 7. An senkrechten Stützen 8 des ersten Hochregals 1 sind Barcode-Labels 9 angebracht. Zur besseren Erkennbarkeit sind in der Darstellung die senkrechten Stützen 8 gekippt dargestellt, so dass in der Aufsicht deren dem Gang 3 zugewandte Vorderseite sichtbar ist. Ein Laserscanner 10 ist so in dem Kommissionierstapler 4 angeordnet, dass er seitlich quer zu der Fahrzeuglängsachse 6 orientiert ist. Dabei braucht die Richtung, in der der Laserscanner 10 scannt, nicht genau senkrecht zu der Fahrzeugachse 6 sein, sondern sie muss so orientiert sein, dass die quer zur Fahrzeugachse 6 an dem ersten Hochregal 1 angebrachten Barcode-Labels 9 erfasst werden können.

Beim Vorbeifahren des Kommissionierstaplers 4 an der Stütze 8 wird das senkrecht angeordnete Barcode-Label 9 gescannt und die Steuerung des Kommissionierstaplers 4 bestimmt die Ist-Position. Beim Weiterfahren wird anhand der zurückgelegten Wegstrecke von der Steuerung immer die aktuelle Position bestimmt. Sobald eine Zielposition erreicht wird, wird der Kommissionierstapler 4 abgebremst und angehalten. Aufgrund von in der Steuerung gespeicherten Daten kann sodann die benötigte Hubhöhe erreicht werden, indem eine Hubbewegung an dem richtigen Regalfach gestoppt wird. Anhand solcher Daten können nun auch weitere regalfachspezifische Eigenschaften, wie z.B. eine individuelle Ausschubtiefe des Seitenschubs berücksichtigt werden.

### Bezugszeichenliste

- 1: erstes Hochregal
- 2: zweites Hochregal
- 3: Gang
- 4: Kommissionierstapler
- 5: Gabel
- 6: Fahrzeuglängsachse
- 7: Palettenplatz
- 8: Stütze
- 9: Barcode-Label
- 10: Laserscanner

## Patentansprüche

1. Flurförderzeug, insbesondere Kommissionierstapler (4), mit zumindest einem Umgebungssensor (10) zur Erfassung von in einem Regallager an einem Regal (1) angebrachten Markierungen (9),
**dadurch gekennzeichnet,**
**dass** die Markierungen (9) Informationen über den Ort der Markierung (9) im Regallager enthalten und der Umgebungssensor (10) in dem Flurförderzeug mit seiner Erfassungsrichtung zur Seite des Flurförderzeugs hin in Bezug auf eine Fahrzeuglängsachse (6) orientiert ist sowie der Umgebungssensor ein Laserscanner (10) für Barcode-Labels (9) ist.

2. Flurförderzeug nach Anspruch 1,
**dadurch gekennzeichnet,**
**dass** der Laserscanner (10) senkrecht gegenüber dem Boden orientierte Barcode-Labels (9) scannen kann.

3. Flurförderzeug nach Anspruch 1 oder 2,
**dadurch gekennzeichnet,**
**dass** zwei Laserscanner in dem Flurförderzeug angeordnet sind, die zu beiden Seiten des Flurförderzeugs hin orientiert sind.

4. Flurförderzeug nach einem der vorhergehenden Ansprüche,
**dadurch gekennzeichnet,**
**dass** der Umgebungssensor an einem durch eine Hubbewegung anhebbaren Abschnitt des Flurförderzeugs angeordnet ist und abhängig von der Hubhöhe auf verschiedenen Höhen angebrachte Markierungen erfassen kann.

5. Flurförderzeug nach einem der vorhergehenden Ansprüche,
**dadurch gekennzeichnet,**
**dass** eine Steuervorrichtung vorhanden ist, die die aktuelle Position des Flurförderzeugs zwischen der Erfassung zweier Markierungen aus der zurückgelegten Wegstrecke berechnet.

6. Flurförderzeug nach Anspruch 5,
**dadurch gekennzeichnet,**
**dass** bei dem Erreichen einer gewünschten Ziel position die Steuerung eine Fahrbewegung des Flurförderzeugs und/oder eine Hubbewegung stoppen kann.

7. Flurförderzeug nach Anspruch 5 oder 6,
**dadurch gekennzeichnet,**
**dass** an einer gewünschten Zielposition die Steuerung eine von den Eigenschaften des Regals an der Zielposition abhängige Ausschubtiefe einer Lastgabel steuern kann.

8. Lagersystem mit einem Regal (1), das an einer Vorderseite angebrachte Markierungen (9) aufweist, wobei die Markierungen (9) Informationen über den Ort der Markierung (9) im Regallager enthalten, und mit einem Flurförderzeug nach einem der Ansprüche 1 bis 7.

9. Lagersystem nach Anspruch 8,
**dadurch gekennzeichnet,**
**dass** die Markierungen Barcode-Labels (9) sind, die an senkrechten Regalständern (8) angebracht sind.

10. Verfahren zur Zielfindung in einem Lagersystem unter Verwendung eines Lagersystems nach einem der Ansprüche 8 oder 9 mit den Schritten
- Bestimmen der Ist-Position des Flurförderzeugs hinsichtlich Ort und/oder Hubhöhe durch die Steuerung,
- Bestimmen des Wegs zum Zielpunkt durch die Steuerung und
- Anzeigen des Wegs zum Zielpunkt für einen Fahrer durch eine Anzeigevorrichtung.

11. Verfahren nach Anspruch 10,
**dadurch gekennzeichnet,**
**dass** bei Erreichen des Zielpunkts eine Fahrbewegung des Flurförderzeugs und/oder eine Hubbewegung gestoppt wird.

12. Verfahren nach Anspruch 10 oder 11,
**dadurch gekennzeichnet,**
**dass** an einer gewünschten Zielposition die Steuerung eine von den Eigenschaften des Regals an der Zielposition abhängige Ausschubtiefe einer Lastgabel steuert.

## Claims

1. Industrial truck, in particular an order picker (4), having at least one surroundings sensor (10) for sensing marks (9) which are provided on a rack (1) of a rack storage system,
**characterized**
**in that** the marks (9) contain information about the location of the mark (9) in the rack storage system, and the surrounding sensor (10) is oriented in the industrial truck with its sensing direction towards the side of the industrial truck with respect to a longitudinal axis (6) of the vehicle, and the surrounding sensor is a laser scanner (10) for barcode labels (9).

2. Industrial truck according to Claim 1,
**characterized**
**in that** the laser scanner (10) can scan barcode labels (9) which are oriented perpendicularly with respect to the floor.

3. Industrial truck according to Claim 1 or 2,
**characterized**
**in that** two laser scanners are arranged in the industrial truck and are oriented towards both sides of the industrial truck.

4. Industrial truck according to one of the preceding claims,
**characterized**
**in that** the surrounding sensor is arranged on a section of the industrial truck which can be lifted up by a lifting movement, and can sense, as a function of the lifting height, marks which are provided at different heights.

5. Industrial truck according to one of the preceding claims,
**characterized**
**in that** a control device is present which calculates the current position of the industrial truck from the distance travelled between the sensing of two marks.

6. Industrial truck according to Claim 5,
**characterized**
**in that** when a desired target position is reached the control system can stop locomotion of the industrial truck and/or a lifting movement.

7. Industrial truck according to Claim 5 or 6,
**characterized**
**in that** at a desired target position the control system can control an extension depth of a loading fork, which is dependent on the properties of the rack at the target position.

8. Storage system having a rack (1) which has marks (9) which are provided on a front side, wherein the marks (9) contain information about the location of the mark (9) in the rack storage system, and having an industrial truck according to one of Claims 1 to 7.

9. Storage system according to Claim 8,
**characterized**
**in that** the marks are barcode labels (9) which are provided on vertical rack system stands (8).

10. Method for finding a target in a storage system using a storage system according to one of Claims 8 and 9, having the steps
- determination of the actual position of the industrial truck in terms of its location and/or lifting height by means of the control system,
- determination of the travel with respect to the target point by means of the control system, and
- displaying of the travel with respect to the target point for a driver by means of a display device.

11. Method according to Claim 10,
**characterized**
**in that** when the target point is reached, a locomotion movement of the industrial truck and/or a lifting movement are/is stopped.

12. Method according to Claim 10 or 11,
**characterized**
**in that** at a desired target position the control system controls an extension depth of a load fork, which is dependent on the properties of the rack at the target position.

## Revendications

1. Chariot de manutention, notamment gerbeur de préparation de commande (4), comprenant au moins un détecteur d'environnement (10) pour détecter des marquages (9) apposés sur un rayonnage (1) dans un entrepôt à rayonnages, **caractérisé en ce que** les marquages (9) contiennent des informations sur l'emplacement du marquage (9) dans l'entrepôt à rayonnages et le détecteur d'environnement (10) dans le chariot de manutention est orienté avec son sens de détection vers le côté du chariot de manutention par rapport à un axe longitudinal de véhicule (6), et le détecteur d'environnement est un scanner à laser (10) pour étiquettes à code à barres (9).

2. Chariot de manutention selon la revendication 1, **caractérisé en ce que** le laser à scanner (10) peut lire des étiquettes à code à barres (9) orientées perpendiculairement par rapport au sol.

3. Chariot de manutention selon la revendication 1 ou 2, **caractérisé en ce que** deux scanners à laser sont montés dans le chariot de manutention, lesquels sont orientés vers les deux côtés du chariot de manutention.

4. Chariot de manutention selon l'une des revendications précédentes, **caractérisé en ce que** le détecteur d'environnement est disposé sur une portion du chariot élévateur qui peut être élevée par un mouvement de levage et, suivant la hauteur de levage, peut détecter des marquages apposés à différentes hauteurs.

5. Chariot de manutention selon l'une des revendications précédentes, **caractérisé en ce qu'**il existe un dispositif de commande qui calcule la position actuelle du chariot élévateur entre la détection de deux marquages à partir de la distance parcourue.

6. Chariot de manutention selon la revendication 5, **caractérisé en ce que** lorsqu'une position de destination souhaitée est atteinte, la commande peut arrêter un mouvement de déplacement du chariot de manutention et/ou un mouvement de levage.

7. Chariot de manutention selon la revendication 5 ou 6, **caractérisé en ce qu'**à une position de destination souhaitée, la commande peut commander une profondeur de sortie d'une fourche porte-charge qui dépend des caractéristiques du rayonnage à la position de destination.

8. Système de stockage comprenant un rayonnage (1) qui présente des marquages (9) apposés sur un côté avant, les marquages (9) contenant des informations sur l'emplacement du marquage (9) dans l'entrepôt à rayonnages, et comprenant un chariot de manutention selon l'une des revendications 1 à 7.

9. Système de stockage selon la revendication 8, **caractérisé en ce que** les marquages sont des étiquettes à code à barres (9) qui sont apposées sur des montants de rayonnage (8) verticaux.

10. Procédé de recherche d'une destination dans un système de stockage en utilisant un système de stockage selon l'une des revendications 8 ou 9, comprenant les étapes suivantes :
- détermination de la position réelle du chariot de manutention du point de vue de l'emplacement et/ou de la hauteur de levage par la commande,
- détermination du trajet jusqu'au point de destination par la commande et
- affichage du trajet jusqu'au point de destination à l'attention d'un conducteur par un dispositif d'affichage.

11. Procédé selon la revendication 10, **caractérisé en ce qu'**un mouvement de déplacement du chariot de manutention et/ou un mouvement de levage est arrêté lorsque le point de destination est atteint.

12. Procédé selon la revendication 10 ou 11, **caractérisé en ce qu'**à une position de destination souhaitée, la commande commande une profondeur de sortie d'une fourche porte-charge qui dépend des caractéristiques du rayonnage à la position de destination.
